# EUROPÄISCHE PATENTSCHRIFT

(11) **EP 0 904 187 B1**
(45) Veröffentlichungstag und Bekanntmachung des Hinweises auf die Patenterteilung: **18.09.2002**
(21) Anmeldenummer: 98909211.9
(22) Anmeldetag: 20.03.1998
(51) Int. Cl.: B29C 47/20

(54) **VERFAHREN ZUR HERSTELLUNG CELLULOSISCHER SCHLAUCHFOLIEN**
METHOD FOR PRODUCING CELLULOSE TUBULAR FILMS
PROCEDE POUR PRODUIRE DES FILMS TUBULAIRES CELLULOSIQUES

(30) Priorität: 21.03.1997 AT 49597
(43) Veröffentlichungstag der Anmeldung: 31.03.1999
(73) Patentinhaber: LENZING AKTIENGESELLSCHAFT, 4860 Lenzing (AT)
(72) Erfinder: SCHLOSSNIKL, Christian, A-4840 Vöcklabruck (AT); GSPALTL, Peter, A-8071 Grambach (AT); KOFLER, Alois, A-4861 Schörfling (AT)
(74) Vertreter: Schwarz, Albin, Dr.
(86) Internationale Anmeldenummer: AT9800074
(87) Internationale Veröffentlichungsnummer: WO98042492

(56) Entgegenhaltungen:
- WO-A-95/07811
- WO-A-95/35340
- DE-C- 367 972
- DE-C- 549 410
- FR-A- 815 744
- US-A- 3 423 400
- US-A- 4 164 536

## Beschreibung

Die vorliegende Erfindung betrifft die Verwendung einer Vorrichtung, die eine Extrusionsdüse mit einem im wesentlichen ringförmigen Extrusionsspalt umfaßt, wobei im Inneren des vom Extrusionspalt gebildeten Ringes eine Zuleitung für Fällungsmittel und eine Ableitung für gebrauchtes Fällungsmittel vorgesehen ist, zur Herstellung cellulosischer Schlauchfolien durch Extrusion einer Lösung von Cellulose in einem wässerigen tertiären Aminoxid in ein unterhalb der Vorrichtung befindliches Fällungsmittel. Die vorliegende Erfindung betrifft auch ein Verfahren zur Herstellung cellulosischer Schlauchfolien.

Aus der US-A-2 179 181 ist bekannt, daß tertiäre Aminoxide Cellulose zu lösen vermögen und daß aus diesen Lösungen durch Fällung cellulosische Formkörper wie Fasern gewonnen werden können. Ein Verfahren zur Herstellung derartiger Lösungen ist beispielsweise aus der EP-A - 0 356 419 bekannt. Gemäß dieser Veröffentlichung wird zunächst eine Suspension von Cellulose in einem wässerigen tertiären Aminoxid bereitet. Das Aminoxid enthält bis zu 40 Masse-% Wasser. Die wässerige Cellulosesuspension wird erhitzt, und unter Druckverminderung wird so lange Wasser abgezogen, bis die Cellulose in Lösung geht.

Aus der DE-A - 28 44 163 ist bekannt, zur Herstellung von Cellulosefasern zwischen Spinndüse und Fällbad eine Luftstrecke bzw. einen Luftspalt zu legen, um einen Düsenverzug zu erreichen. Dieser Düsenverzug ist notwendig, da nach Kontakt der geformten Spinnlösung mit dem wässerigen Fällbad eine Reckung der Fäden sehr erschwert wird. Im Fällbad wird die im Luftspalt eingestellte Faserstruktur fixiert.

Ein Verfahren zur Herstellung cellulosischer Fäden ist weiters aus der DE-A - 28 30 685 bekannt, wonach eine Lösung von Cellulose in einem tertiären Aminoxid in warmem Zustand zu Filamenten geformt, die Filamente mit Luft abgekühlt und anschließend in ein Fällbad eingebracht werden, um die gelöste Cellulose zu fällen. Die Oberfläche der versponnenen Fäden wird weiters mit Wasser benetzt, um ihre Neigung, an benachbarten Fäden anzukleben, zu vermindern.

Eine Vorrichtung zur Herstellung von nahtlosen Schlauchfolien ist aus der WO-A-9313670 bekannt. Gemäß diesem bekannten Verfahren wird die Celluloselösung durch eine Extrusionsdüse mit ringförmigem Extrusionsspalt zu einem Schlauch geformt, der über einen zylindrischen Dorn gezogen und in das Fällbad eingebracht wird. Damit der extrudierte Schlauch nicht an der Dornoberfläche haften bleibt, wird seine Oberfläche mit einem Wasserfilm überzogen, sodaß die Innenseite des Schlauches koaguliert und über den zylindrischen Dorn gleitet. Dies hat jedoch den Nachteil, daß das zur Benetzung der Dornoberfläche eingespeiste Wasser bis zum Extrusionspalt steigen kann und die Düsenlippe benetzt, wodurch es nicht nur bereits beim eigentlichen Extrusionsvorgang zu unerwünschten Koagulationen kommt, sondern auch die Extrusionsdüse abgekühlt wird. Dies ist deshalb unerwünscht, da die abgekühlte Düse die zu extrudierende Lösung abkühlt, deren Viskosität dadurch derart zunimmt, daß ein einwandfreies Extrudieren zu Folien mit gleichmäßiger Dicke nicht mehr möglich ist. Dazu kommt noch, daß sich die vorbekannte Vorrichtung nur aufwendig umbauen läßt, wenn z.B. Folien mit unterschiedlichen Dicken hergestellt werden sollen.

Aus der EP-A - 0 042 517 ist ein Verfahren zur Herstellung einer Dialysemembran aus Cellulose bekannt, bei dem Membranen aus einer Flachfolie oder einer Schlauchfolie oder aus Hohlfäden mittels entsprechender Düsen hergestellt werden.

Aus der WO-A-9535340 ist ein Blasverfahren zur Herstellung von orientierten Cellulosefolien durch Verspinnen einer Celluloselösung in ein Fällbad bekannt, bei welchem die Lösung über eine Filmblasdüse und einen äußeren Luftspalt nach unten in das Fällungsbad extrudiert wird. Der Orientierungsgrad kann durch Längs- und Querverstreckung erhöht werden.

Aus der DE-A - 195 15 137 ist ein Verfahren zur Herstellung von Schlauchfolien bekannt, gemäß welchem die Celluloselösung zunächst zu einem Schlauch extrudiert wird, wobei dieser Schlauch auf dem Weg vom Ringdüsenaustritt bis zum Eintritt in das Fällungsmedium in Extrusionsrichtung verstreckt und durch einen in dem Schlauchinnenraum wirksamen Gasüberdruck in einem Verhältnis im Bereich zwischen 1:1 und 1:10 aufgeweitet, d.h. gedehnt wird. Durch diese Dehnung wird der Schlauch somit quer zur Extrusionsrichtung verstreckt.

Eine Vorrichtung der eingangs beschriebenen Art, d.h. zur Herstellung cellulosischer Schlauchfolien durch Extrusion einer Lösung von Cellulose in einem tertiären Aminoxid in ein unterhalb der Vorrichtung befindliches Fällungsmittel, welche Vorrichtung eine Extrusionsdüse mit einem im wesentlichen ringförmigen Extrusionsspalt umfaßt, wobei im Inneren des vom Extrusionspaltes gebildeten Ringes eine Zuleitung für Fällungsmittel und eine Ableitung für gebrauchtes Fällungsmittel vorgesehen ist sowie ein Verfahren gemäß dem Oberbegriff des Anspruchs 6 können der WO-A-9507811 entnommen werden. Bei dieser Vorrichtung kann unterhalb der Ableitung eine Distanzscheibe vorgesehen sein, die ein Zusammenfallen der extrudierten Schlauchfolie im Fällbad verhindern soll.

Die Vorrichtungen dieses Standes der Technik zur Herstellung von cellulosischen Schlauchfolien sind komplex aufgebaut.

Die Erfindung gemäß dem Anspruch 1 besteht in der Verwendung einer Vorrichtung, die eine Extrusionsdüse mit einem im wesentlichen ringförmigen Extrusionsspalt umfaßt, wobei im Inneren des vom Extrusionspalt gebildeten Ringes eine Zuleitung für Fällungsmittel und eine Ableitung für gebrauchtes Fällungsmittel vorgesehen ist, und wobei die Zuleitung für das Fällungsmittel unterhalb der Ableitung für das gebrauchte Fällungsmittel endet, zur Herstellung cellulosischer Schlauchfolien durch Extrusion einer Lösung von Cellulose in einem tertiären Aminoxid in ein unterhalb der Vorrichtung befindliches Fällungsmittel.

Die US-A-4164536 sowie die DE-C-549410 beschreiben Vorrichtungen gemäß dem Anspruch 1, bei welchen eine Celluloselösung, insbesondere Viskose durch eine Extrusionsdüse mit einem ringförmigen Extrusionsspalt in ein unterhalb der Vorrichtung befindliches Fällungsbad extrudiert wird. Im Inneren des vom Extrusionsspalt gebildeten Ringes ist eine Zuleitung für Fällungsmittel vorgesehen, welche unterhalb der Ableitung für das Fällungsmittel endet.

Die DE-C-367972 beschreibt eine Vorrichtung, bei welchem ein Fällungsmittel an der inneren Seite eines extrudierten Celluloseschlauches zugeführt wird und rückläufig wieder abgezogen wird.

Es hat sich gezeigt, daß bei der erfindungsgemäßen Verwendung der Flüssigkeitsspiegel im Inneren des Schlauches auf einfache Weise eingestellt und vor allem konstant gehalten werden kann. Ferner hat es sich für den Fällungsvorgang als vorteilhaft erwiesen, wenn das Fällungsmittel im Inneren des Schlauches gegen die Extrusionsrichtung, d.h. Transportrichtung in das Fällbad, strömen gelassen wird. Auch in dieser Hinsicht unterscheidet sich die vorliegende Erfindung vom Stand der Technik, da, wie unten beschrieben wird, frisches Fällungsmittel stets mit Folienbereichen in Berührung kommt, in denen die Cellulose bereits zu einem hohen Ausmaß in gefälltem Zustand vorliegt. Das am höchsten mit Aminoxid angereicherte Fällungsmittel kommt hingegen mit Folienbereichen in Berührung, in denen die Cellulose noch in einem geringen Ausmaß gefällt vorliegt.

Eine bevorzugte Ausgestaltung der erfindungsgemäßen Verwendung ist dadurch gekennzeichnet, daß unterhalb des Extrusionsspaltes ein Distanzhalter vorgesehen ist, der vorzugsweise so ausgebildet ist, daß er einen im wesentlichen kreisförmigen Umfang besitzt.

Die Querschnittsfläche des Distanzhalters kann größer sein als jene Fläche, die vom Ring des Extrusionspaltes gebildet wird. Auf diese Weise ist ein Verstrecken der schlauchförmig extrudierten Lösung quer zur Transportrichtung möglich.

Die Querschnittsfläche des Distanzhalters kann aber auch kleiner sein als jene Fläche, die vom Ring des Extrusionspaltes gebildet wird.

Der Distanzhalter ist bevorzugt so ausgebildet, daß die Größe der Querschnittsfläche verändert werden kann. Dies ist z.B. bei einer Scheibe bzw. einem Ring mit verschiebbaren Gliedern möglich, analog einer Lochblende, bei der die verschiebbaren Teile auf- bzw. ineinander gleiten können, wodurch der Außendurchmesser veränderbar ist.

Weiters kann eine Veränderung der Größe der Querschnittsfläche auch dadurch erreicht werden, daß der Distanzhalter aus einem elastischen Ring, z.B. aus Gummi, besteht, der mit Luft, Wasser oder dergleichen beaufschlagt werden kann. über das im Inneren befindliche Medium ist damit der Durchmesser des elastischen Ringes steuerbar. Eine Variante dieser Ausführungsform besteht darin, daß kein vollständiger Ring verwendet wird, sondern daß die Innenseite aus einem festen Teil aus z.B. Stahl oder Kunststoff besteht und auf diesem ein elastischer Teil befestigt ist. Eine weitere Ausführungsform besteht in einer Halbschale, eventuell bestehend aus Segmenten, deren Fixpunkt verschiebbar ist, sodaß sich dadurch der Außendurchmesser verändert (Regenschirmprinzip).

Die Erfindung betrifft gemäß dem Anspruch 6 auch ein Verfahren zur Herstellung cellulosischer Schlauchfolien, bei dem eine Lösung von Cellulose in einem tertiären Aminoxid durch eine Extrusionsdüse mit einem im wesentlichen ringförmigen Extrusionsspalt extrudiert wird, wobei die Lösung schlauchförmig ausgeformt wird, welche Lösung in ein Fällbad transportiert wird und dabei sowohl mit ihrer Innenseite als auch mit ihrer Außenseite mit Fällungsmittel in Kontakt gebracht wird, wodurch die Cellulose gefällt und die Schlauchfolie ausgebildet wird, wobei das Fällungsmittel, mit welchem die schlauchförmig ausgeformte Lösung mit ihrer Innenseite in Kontakt gebracht wird, tertiäres Aminoxid gelöst enthält, und das dadurch gekennzeichnet, daß das Fällungsmittel im Inneren der schlauchförmig ausgeformten Lösung gegen die Transportrichtung der schlauchförmig ausgeformten Lösung strömt, so daß die Konzentration des im Fällungsmittel gelösten tertiären Aminoxides innerhalb der schlauchförmig ausgeformten Lösung in der Transportrichtung der schlauchförmig ausgeformten Lösung abnimmt.

Beim erfindungsgemäßen Verfahren kann die schlauchförmig ausgeformte Lösung in Transportrichtung und/oder quer zur Transportrichtung verstreckt werden.

Die Verstreckung der schlauchförmig ausgeformten Lösung quer zur Transportrichtung kann mittels hydrostatischen Drucks oder durch Gasdruck oder mittels eines Distanzhalters erfolgen.

Die durch Fällen der Cellulose ausgebildete Schlauchfolie nach Transport durch das Fällbad wird getrocknet, wobei die Schlauchfolie bevorzugt unter Spannung gehalten wird, um ein Schrumpfen zu verhindern.

Das erfindungsgemäße Verfahren eignet sich besonders gut zur Verarbeitung wässeriger Lösungen von Cellulose in wässerigem N-Methylmorpholin-N-oxid (NMMO).

An Hand der beigefügten Zeichung wird eine bevorzugte Ausgestaltung der erfindungsgemäß verwendeten Vorrichtung noch näher erläutert.

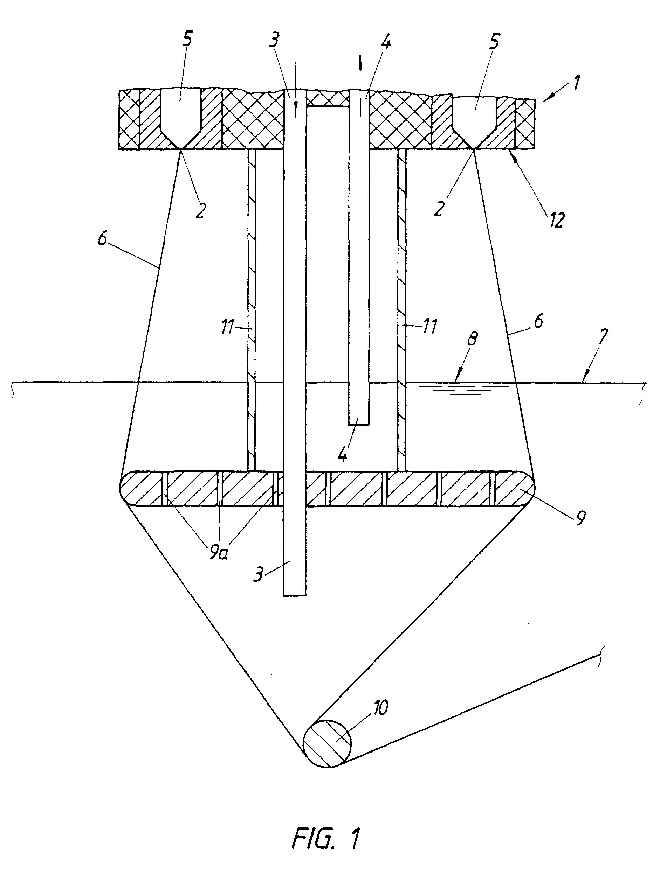

Die Figur 1 zeigt schematisch einen Querschnitt eines unteren Teils einer Extrusionsvorrichtung, die im wesentlichen eine Ringdüse 1 mit einem ringförmigen Extrusionsspalt 2, eine Zuleitung 3 für frisches Fällungsmittel (Wasser oder Aminoxid/Wasser-Gemisch) und eine Ableitung 4 für gebrauchtes Fällungsmittel aufweist.

Die Celluloselösung wird über den ringförmigen Spinnmasseraum 5 durch den Extrusionsspalt 2 gepreßt, wodurch die Celluloselösung in Form einer Schlauchfolie 6 in den Luftraum, der zwischen der Fällbadoberfläche 7 und der Unterseite 8 der Ringdüse 1 besteht, extrudiert wird.

Die schlauchförmig extrudierte Lösung 6 wird in das Fällbad 7 abgezogen, in welchem sie an der Außenseite mit Fällungsmittel in Kontakt kommt, wodurch die gelöste Cellulose koaguliert und das Aminoxid in das Fällbad abgegeben wird. Auch im Inneren des Schlauches 6 befindet sich Fällungsmittel, sodaß die Cellulose auch an der Innenseite koaguliert. Auch dabei wird Aminoxid abgegeben.

In der Figur befindet sich das Niveau 8 des im Inneren des Schlauches 6 befindlichen Fällungsmittels auf gleicher Höhe wie das Fällbad 7. Über die Zuleitung 3 kann Fällungsmittel in das Innere des Schlauches 6 eingebracht und über die Ableitung 4 abgezogen werden. Auf diese Weise kann das Niveau 8 des Fällungsmittels im Inneren des Schlauches 6 eingestellt werden.

Im erfindungsgemäßen Verfahren kann das Niveau 8 des im Inneren des Schlauches 6 befindlichen Fällungsmittels auch höher oder tiefer als das Niveau 7 des Fällbades eingestellt werden. Die Zusammensetzung des Fällungsmittels im Inneren des Schlauches 6 kann von jener des Fällbades verschieden sein.

Die Schlauchfolie 6 wird über das Umlenkorgan 10 abgezogen und dabei in Transportrichtung, das heißt in Richtung Fällbad 7, verstreckt.

Die Schlauchfolie 6 wird über einen Distanzhalter 9 gezogen. Dieser Distanzhalter 9 hat die Form einer kreisförmigen Scheibe, die mittels Stangen 11 mit der Düse 1 fest verbunden ist. Der Distanzhalter 9 weist durchgängige Bohrungen 9a zum Stoffaustausch auf. Die Zuleitung 3 führt durch den Distanzhalter 9. Statt einer Scheibe kann auch ein Ring als Distanzhalter vorgesehen sein.

Mit dem Distanzhalter 9 wird der Schlauch 6 gedehnt, was einem Verstrecken quer zur Transportrichtung entspricht. Es ist klar, daß dieses Verstrecken quer zur Transportrichtung mit der Größe des kreisförmigen Distanzhalters zunimmt.

Durch Zuführen von frischem Fällungsmittel über die Zuleitung 3 und Ableiten von gebrauchtem, also Aminoxid-hältigem, Fällbad über die Ableitung 4, die oberhalb der Zuleitung 3 endet, nimmt die Aminoxid-Konzentration in Richtung Niveau 8 zu, bzw. anders ausgedrückt, in Transportrichtung der Schlauchfolie 6 ab.

Am Ende der Zuleitung 3 können auch Umlenkbleche (nicht dargestellt) vorgesehen sein, um den Flüssigkeitsstrom aus der Zuleitung 3 nach oben in Richtung Niveau 8 umzulenken.

Eine Verstreckung quer zur Transportrichtung kann anstelle des Distanzhalters auch mit hydrostatischem Druck erzielt werden. Dazu wird einfach das Niveau 8 des Fällungsmittels innerhalb des Schlauches 6 höher als das Niveau 7 des Fällbades eingestellt. Der Druck desjenigen Teils des im Inneren des Schlauches 6 befindlichen Fällungsmittels, der sich über dem Niveau 7 befindet, bewirkt dabei die Dehnung.

Die Dehnung kann auch mittels Gasdruckes erzielt werden, wobei naturgemäß an der Düse 1 eine Gaszuführung (nicht gezeigt) vorgesehen sein muß, mit welcher die Schlauchfolie 6 im Raum zwischen der Unterseite 8 der Düse und dem Fällbad 7 aufgeblasen wird. Dabei kann das Gas auch ausgetauscht werden, das heißt, es wird mit einem Gasüberschuß gearbeitet. In diesem Fall ist naturgemäß an der Düse auch eine Gasableitung (nicht dargestellt) vorzusehen.

## Patentansprüche

1. Verwendung einer Vorrichtung die eine Extrusionsdüse (1) mit einem im wesentlichen ringförmigen Extrusionsspalt (2) umfaßt, wobei im Inneren des vom Extrusionspalt (2) gebildeten Ringes eine Zuleitung (3) für Fällungsmittel und eine Ableitung (4) für gebrauchtes Fällungsmittel vorgesehen ist, und wobei
die Zuleitung (3) für das Fällungsmittel unterhalb der Ableitung (4) für das gebrauchte Fällungsmittel endet, zur Herstellung cellulosischer Schlauchfolien durch Extrusion einer Lösung von Cellulose in einem wässerigen tertiären Aminoxid in ein unterhalb der Vorrichtung befindliches Fällungsmittel (7).

2. Verwendung nach Anspruch 1, **dadurch gekennzeichnet, daß** unterhalb des Extrusionsspaltes (2) ein Distanzhalter (9) vorgesehen ist.

3. Verwendung nach Anspruch 1, **dadurch gekennzeichnet, daß** der Distanzhalter (9) so ausgebildet ist, daß er einen im wesentlichen kreisförmigen Umfang besitzt.

4. Verwendung nach einem der Ansprüche 2 oder 3, **dadurch gekennzeichnet, daß** die Querschnittsfläche des Distanzhalters (9) größer ist als jene Fläche, die vom Ring des Extrusionspaltes (2) gebildet wird.

5. Verwendung nach einem der Ansprüche 1 bis 4, **dadurch gekennzeichnet, daß** der Distanzhalter (9) so ausgebildet ist, daß seine Querschnittsfläche verändert werden kann.

6. Verfahren zur Herstellung cellulosischer Schlauchfolien, bei dem eine Lösung von Cellulose in einem wässerigen tertiären Aminoxid durch eine Extrusionsdüse (1) mit einem im wesentlichen ringförmigen Extrusionsspalt (2) extrudiert wird, wobei die Lösung schlauchförmig ausgeformt wird, welche Lösung in ein Fällbad (7) transportiert wird und dabei sowohl mit ihrer Innenseite als auch mit ihrer Außenseite mit Fällungsmittel in Kontakt, gebracht wird, wodurch die Cellulose gefällt und die Schlauchfolie ausgebildet wird, wobei
das Fällungsmittel, mit welchem die schlauchförmig ausgeformte Lösung (6) mit ihrer Innenseite in Kontakt gebracht wird, tertiäres Aminoxid gelöst enthält, **dadurch gekennzeichnet, daß** das Fällungsmittel im Inneren der schlauchförmig ausgeformten Lösung (6) gegen die Transportrichtung der schlauchförmig ausgeformten Lösung (6) strömt, so daß die Konzentration des im Fällungsmittel gelösten tertiären Aminoxides innerhalb der schlauchförmig ausgeformten Lösung (6) in der Transportrichtung der schlauchförmig ausgeformten Lösung abnimmt.

7. Verfahren nach Anspruch 6, **dadurch gekennzeichnet, daß** die schlauchförmig ausgeformte Lösung in Transportrichtung verstreckt wird.

8. Verfahren nach einem der Ansprüche 6 oder 7, **dadurch gekennzeichnet, daß** die schlauchförmig ausgeformte Lösung quer zur Transportrichtung verstreckt wird.

9. Verfahren nach Anspruch 8, **dadurch gekennzeichnet, daß** die schlauchförmig ausgeformte Lösung mittels hydrostatischen Drucks oder durch Gasdruck quer zur Transportrichtung verstreckt wird.

10. Verfahren nach Anspruch 8, **dadurch gekennzeichnet, daß** die schlauchförmig ausgeformte Lösung mittels eines Distanzhalters (9) quer zur Transportrichtung verstreckt wird.

11. Verfahren nach einem der Ansprüche 6 bis 10, **dadurch gekennzeichnet, daß** die durch Fällen der Cellulose ausgebildete Schlauchfolie (6) nach Transport durch das Fällbad getrocknet wird, wobei die Schlauchfolie (6) unter Spannung gehalten wird, um ein Schrumpfen zu verhindern.

12. Verfahren nach einem oder mehrerer der Ansprüche 6 bis 11, **dadurch gekennzeichnet, daß** als tertiäres Aminoxid N-Methylmorpholin-N-oxid eingesetzt wird.

## Claims

1. The use of a device comprising an extrusion die (1) having a substantially annular extrusion gap (2), whereby a supply duct (3) for said precipitant and a discharge duct (4) for used precipitant each is provided in the interior of said ring formed by said extrusion gap (2) and whereby the supply duct (3) for said precipitant terminates below said discharge duct (4) for used precipitant, for producing cellulosic tubular films by extruding a solution of cellulose in an aqueous tertiary amine oxide into a precipitant (7) provided below said device.

2. The use according to claim 1, **characterized in that** a spacer (9) is provided below said extrusion gap (2).

3. The use according to claim 1, **characterized in that** said spacer (9) is designed to have a substantially circular periphery.

4. The use according to one of claims 2 or 3, **characterized in that** said spacer (9) has a cross sectional area larger than the area formed by said ring of said extrusion gap (2).

5. The use according to one of claims 1 to 4, **characterized in that** said spacer (9) is designed to have a cross sectional area capable of being changed.

6. A process for producing cellulosic tubular films by extruding a solution of cellulose in an aqueous tertiary amine oxide through an extrusion die (1) having a substantially annular extrusion gap (2) with said solution being tubularly molded, which solution is transported into a precipitation bath (7) so as to be contacted by precipitant both on its inner side and on its outer side thereby causing said cellulose to precipitate and the tubular film to be formed, whereby the precipitant contacting said tubularly molded solution (6) on its inner side contains dissolved tertiary amine oxide, **characterized in that** the precipitant in the interior of the tubularly molded solution (6) flows against the transport direction of the tubularly molded solution (6) so that the concentration of the tertiary amine oxide dissolved in the precipitant decreases within the tubularly molded solution (6) in said transport direction of the tubularly molded solution.

7. A process according to claim 6, **characterized in that** the tubularly molded solution is stretched in said transport direction.

8. A process according to one of claims 6 or 7, **characterized in that** the tubularly molded solution is stretched transverse to said transport direction.

9. A process according to claim 8, **characterized in that** the tubularly molded solution is stretched transverse to said transport direction by aid of hydrostatic pressure or gas pressure.

10. A process according to claim 8, **characterized in that** the tubularly molded solution is stretched transverse to said transport direction by means of a spacer (9).

11. A process according to one of claims 6 to 10, **characterized in that** said tubular film (6) formed by precipitating said cellulose is dried after transportation through said precipitation bath while keeping said tubular film (6) under tension so as to prevent shrinking.

12. A process according to one or several of claims 6 to 11, **characterized in that** as said tertiary amine oxide N-methyl-morpholine-N-oxide is used.

## Revendications

1. Utilisation d'un dispositif comprenant une filière d'extrusion (1) avec une fente d'extrusion (2) ssensiblement annulaire, étant entendu qu'à l'intérieur de l'anneau formé par la fente d'extrusion (2), il est prévu une conduite d'amenée (3) pour un agent de précipitation et une conduite d'évacuation (4) pour l'agent de précipitation usé, et que la conduite d'amenée (3) pour l'agent de précipitation se termine au-dessous de la conduite d'évacuation (4) pour l'agent de précipitation usé, pour la fabrication de feuilles tubulaires cellulosiques par extrusion d'une solution de cellulose dans un amino-oxyde tertiaire dans un agent de précipitation (7) situé au-dessous du dispositif.

2. Utilisation selon la revendication 1, **caractérisée en ce que**, au -essous de la fente d'extrusion (2) est prévu un écarteur (9).

3. Utilisation selon la revendication 1, **caractérisée en ce que** l'écarteur (9) est conçu de façon à posséder une périphérie approximativement circulaire.

4. Utilisation selon l'une des revendications 2 ou 3, **caractérisée en ce que** la section transversale de l'écarteur (9) est supérieure à la surface que forme l'anneau de la fente d'extrusion (2)

5. Utilisation selon l'une des revendications 1 à 4, **caractérisée en ce que** l'écarteur (9) est conçu de façon que sa section transversale puisse être modifiée.

6. Procédé de fabrication de feuilles tubulaires cellulosiques, dans lequel une solution de cellulose dans un amino-oxyde tertiaire aqueux est extrudée à travers une filière d'extrusion (1) ayant une fente d'extrusion (2) sensiblement annulaire, cette solution se présentant alors sous forme de tube, puis étant transportée dans un bain de précipitation (7) et étant donc mise en contact avec le précipitant tant sur sa face interne que sur sa face externe, ce par quoi la cellulose précipite et la feuille tubulaire est formée, l'agent de précipitation avec lequel la solution tubulaire formée a été mise en contact, contenant de l'amino-oxyde tertiaire dissous, **caractérisé en ce que** l'agent de précipitation s'écoule à l'intérieur de la solution tubulaire (6) en sens contraire de la direction de transport de cette solution tubulaire (6), de sorte que la concentration de l'amino-oxyde tertiaire dissous à l'intérieur de la solution tubulaire (6) diminue dans la direction de transport de la solution tubulaire.

7. Procédé selon la revendication 6, **caractérisé en ce que** la solution tubulaire est étirée dans la direction de transport.

8. Procédé selon l'une des revendications 6 ou 7, **caractérisé en ce que** la solution tubulaire est étirée perpendiculairement à la direction de transport.

9. Procédé selon la revendication 8, **caractérisé en ce que** la solution tubulaire est étirée perpendiculairement à la direction de transport, sous l'effet d'une pression hydrostatique ou d'une pression gazeuse.

10. Procédé selon la revendication 8, **caractérisé en ce que** la solution tubulaire est étirée perpendiculairement à la direction de transport, au moyen de l'écarteur (9).

11. Procédé selon l'une des revendications 6 à 10, **caractérisé en ce que** la feuille tubulaire (6) formée par la précipitation de la cellulose est séchée après le transport par le bain de précipitation, la feuille tubulaire (6) étant maintenue sous tension afin d'éviter une rétraction.

12. Procédé selon une ou plusieurs des revendications 6 à 11, **caractérisé en ce que** l'amino-oxyde tertiaire utilisé est le N-méthylmorpholine-N-oxyde.
